# EUROPÄISCHE PATENTANMELDUNG

(11) **EP 1 626 201 A2**
(43) Veröffentlichungstag der Anmeldung: **15.02.2006**
(21) Anmeldenummer: 05105742.0
(22) Anmeldetag: 28.06.2005
(51) Int. Cl.: F16G 5/16

(54) **Traktionsoptimierter Hybridkeilriemen einer Hybridkeilriemen/Scheiben-Anordnung**

(30) Priorität: 12.08.2004 DE 102004039145
(71) Anmelder: ContiTech Antriebssysteme GmbH, 30165 Hannover (DE)
(72) Erfinder: Sattler, Heiko, Dr., 30175 Hannover (DE); Kaps, Norbert, 30163 Hannover (DE)

(57) **Zusammenfassung**

2.1 Ein Hybridkeilriemen (4) besteht aus mindestens einem Zugträger (8) und einer Vielzahl formschlüssig daran angebrachter Stützelemente (10a, 10b, ...). Die Seitenflanken (12a, 12b) der Stützelemente (10a, 10b) stehen jeweils mit Riemenscheiben-Flanken (14a, 14b) in Eingriff.
   Bei einem neu zu konzipierenden Hybridkeilriemen (4) soll eine einfache Einstellung der Flankenreibwerte an die jeweiligen Anforderungen erfolgen.
2.2 Zu diesem Zweck unterscheiden sich die Seitenflanken (12a, 12b) der jeweils aufeinanderfolgenden Stützelemente (10a, 10b, ...) voneinander, wobei die Unterschiedlichkeit in unterschiedlichen Reibwerten und/oder Abriebbeständigkeit der Flankenoberflächen gegeben ist.
   Bestehen die Stützelemente (10a, 10b, ...) aus einem verstärkenden Kern (22) und einer Kunststoffbeschichtung (24), so ist es ausreichend, wenn lediglich das Material der Kunststoffbeschichtung (24) von einem (10a) zum nächsten Stützelement (10b) in einer festgelegten Reihenfolge aus einzelnen Stützelementen oder Gruppen von Stützelementen variiert.
   Die unterschiedlichen Stützelemente (10a, 10b, ...) können zusätzlich in sensierbarer Weise unterschiedlich markiert sein.

## Beschreibung

Die vorliegende Erfindung betrifft einen Hybridkeilriemen mit den im Oberbegriff des Anspruchs 1 genannten Merkmalen.

Derartige Treibriemen, die auch als Hybridkeilriemen bezeichnet werden, laufen in Scheiben mit entsprechend V-förmigen (keilförmigen) Laufflächen und erlauben eine stufenlos regelbare Übertragung von Drehmomenten.

Im Unterschied zu Zahnriemen, *die formschlüssig* mit den zugeordneten Zahnrädern in Eingriff stehen, ist bei Keilriemen, insbesondere Hybridkeilriemen, eine *reibschlüssige* Ineingriffnahme mit den diesbezüglichen Keilriemenscheiben gegeben. Bei Hochleistungshybridkeilriemen befmdet man sich technisch an der Grenze des Machbaren. Für spezielle Anforderungen bezüglich Drehmomentübertragung ist für jeden Anwendungsfall eine Optimierung der jeweiligen Hybridkeilriemenflanken-Reibbeiwerte vorzunehmen. Da die Hybridkeilriemen mit den Flanken ihrer Stützelemente mit den Wangen der Riemenscheiben in Eingriff stehen, sind jeweils die Reibbeiwerte der Stützelement-Flanken zu optimieren. Da dies jeweils mit beträchtlichem experimentellem Entwicklungsaufwand verbunden ist, wird erfindungsgemäß vorgeschlagen, einen Katalog mit auf diverse Drehmomentanforderungen optimierten Stützelementen gespeichert zu haben, die je nach Bedarf zusammengestellt werden können, z. B. bei Bedarf nach einem Reibwert von 0,35 werden Stützelemente der Typen mit Reibwerten von 0,30 und 0,40 alternierend auf den (die) Zugträger des herzustellenden Hybridkeilriemens montiert.

Wegen der Reibschlüssigkeit der Ineingriffnahme von Hochleistungskeilriemen spielt die genaue Kenntnis des Schlupfes eine bedeutende Rolle. Die Größe des Schlupfes ergibt sich aus der Differenz der Umfangsgeschwindigkeit der Scheiben und der Riemengeschwindigkeit, bzw. der Relation der beiden Größen zueinander, wobei die Scheiben-Umfangsgeschwindigkeit gegeben ist aus dem wirksamen Scheibenradius und der Scheibendrehzahl.
- Als Beispiel für die im Oberbegriff des Anspruchs 1 genannte Treibriemengattung sei die Patentschrift CH 610 074 genannt. Die Seitenflächen der dort beschriebenen Schubelemente wirken reibschlüssig mit den sogenannten Wangen der V-förmigen Scheiben.
- Aus der WO 01/63 144 A1 ist aus der Figur 2 und der zugehörigen Beschreibung auf der Seite 5 in den Zeilen 20 - 26 bekannt, die geneigten, kraftübertragenden Seitenflächen 16 und 17 mit einem Material zu beschichten, das entweder metallisch oder nicht metallisch sein kann.

Bisher wurde Kunststoffmasse, die für den Reibwert an den Flanken verantwortlich ist, in ihrer Zusammensetzung speziell optimiert. Die Erhöhung des Reibwertes einer Kunststoffmasse geht, insbesondere bei Standardmaterialien, mit einer Verringerung der Abriebbeständigkeit einher. Durch gezielten Eingriff in die Rezeptur und das Beimengen von Fasern in die Kunststoffmasse kann dieser gegenläufige Effekt verringert werden. Der Zusammenhang zwischen der Rezeptur einer Kunststoffmasse und dem sich letztlich einstellenden Reibwert ist kaum vorhersehbar, so dass weitläufige und kostenintensive Entwicklungsschleifen notwendig werden. Eine kurzfristige Einstellung an die Anforderungen eines Getriebesystems ist praktisch nicht möglich.

Die Aufgabe der Erfindung, wie sie im Wesentlichen mit Anspruch1 gelöst ist, besteht in der Einstellung des Flankenreibwertes an die Anforderungen eines neu zu konzipierenden Hybridkeilriemens für ein stufenlos verstellbares Getriebe und in einer Erhöhung der Abriebbeständigkeit bei mindestens gleichbleibendem Flankenreibwert.

Die Stützelemente des Hybridrings, die meist aus einem verstärkenden Kern und einer Kunststoffbeschichtung bestehen, werden in einer festgelegten Reihenfolge, die auch aus mehreren Stützelementen bestehen können, mit verschiedenen Kunststoffvarianten ausgeführt. Je nach Anteilen und Folge der verschiedenen Werkstoffe lässt sich der mittlere Reibwert steuern, wobei durchaus am Markt erhältliche Standardmaterialien in Frage kommen. Durch Kombination von Kunststoffen hohen Reibwertes und hoher Abriebbeständigkeit lässt sich die Lebensdauer eins Hybridriemens bei gleichzeitiger Optimierung des Flankenreibbeiwertes verbessern.

Mit dem erfindungsgemäßen Konzept ist eine gezielte Reibwerteinstellung möglich. Es ergibt sich eine erhöhte Abriebbeständigkeit bei mindestens gleichbleibendem Flankenwert.

Zum Schutz einer Hybridkeilriemen/Scheiben-Anordnung vor übermäßigem Verschleiß ist es zweckmäßig, ein Durchrutschen zwischen dem Hybridkeilriemen und den Scheiben zu vermeiden. Kritische Zustände beginnenden Durchrutschens infolge zu hoher Drehmomentbeanspruchung können anhand unterschiedlicher Geschwindigkeiten der Scheibenoberfläche auf dem Laufradius und der Riemengeschwindigkeit, dem sogenannten Schlupf, detektiert werden, um dann durch Erhöhung der wirksamen Anpresskräfte wieder in einen stabilen, verschleißarmen Betriebszustand zu gelangen. Eine Detektierung von unzulässigen Geschwindigkeitsunterschieden setzt eine Möglichkeit zur Ermittlung der Riemengeschwindigkeit im Betrieb voraus, die erfindungsgemäß durch Unterscheidungsmerkmale an unterschiedlichen Blöcken sensierbar wird, indem bei bekanntem Abstand aufeinanderfolgender Blöcke die Zeit gemessen wird, innerhalb der die Blöcke aufeinander folgen, und damit die Riemengeschwindigkeit auswertbar bzw. berechenbar wird. Als Unterscheidungsmerkmale können farblich oder in ihrer Helligkeit oder in sonstiger Weise optisch oder magnetisch unterschiedliche Markierungen vorgesehen werden, wodurch im Betrieb der Riemen/Scheiben-Anordnung die Wiederholfrequenz der in bestimmter Reihenfolge angebrachten Markierungen als Grundlage für die momentane Riemengeschwindigkeit auszuwerten ist. Der Vergleich mit der Scheibengeschwindigkeit auf dem aktuellen Laufradius führt unmittelbar auf unerwünschte Differenzgeschwindigkeiten und lässt die Einleitung von Gegenmaßnahmen zu.

### Zeichnungen

Im folgenden wird ein Ausführungsbeispiel der erfindungsgemäßen Hybridkeilriemen/Scheiben-Anordnung anhand der beigefügten Zeichnungen näher erläutert. Es zeigt:
Fig. 1 einen axialen Schnitt durch eine Keilriemenscheibe nebst Querschnitt durch einen auf die Keilriemenscheibe aufgelegten Hybridkeilriemen;
Fig. 2 einen Längsschnitt durch einen halben Hybridkeilriemen (bzw. die Seitenansicht eines halben Hybridkeilriemens);
Fig. 3 den Längsschnitt durch einen Abschnitt eines Hybridkeilriemens; und
Fig. 4 ein Stützelement eines Hybridkeilriemens mit beidseitig in Stützelement-Schlitze eingelegten Zugträgern (Die rechte Hälfte des Stützelements ist aufgeschnitten).

### Beschreibung

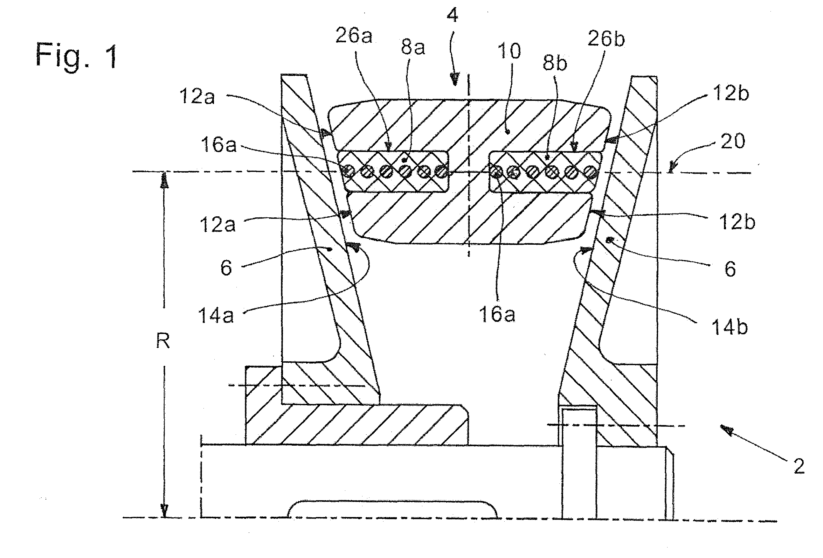

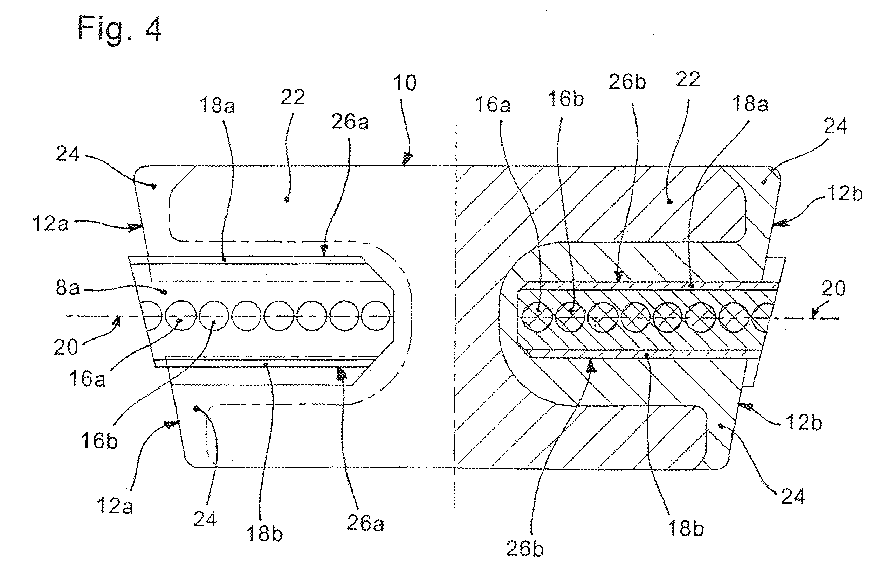

Die in Fig. 1 im Schnitt dargestellte Hybridkeilriemen/Scheiben-Anordnung 2 besteht aus einem Hybridkeilriemen 4 und mindestens zwei Keilriemenscheiben 6. Gemäß dem dargestellten Ausführungsbeispiel weist der Hybridkeilriemen 4 zwei endlose Zugträger 8a, 8b und eine Vielzahl darauf angeordneter Stützelemente (Blöcke) 10; 10a, 10b, ... auf. Die Blöcke 10; 10a, 10b, ... stützen sich mit ihren Seitenflanken 12a, 12b an den Kraftübertragungsflanken (Wangen) 14a, 14b der Scheiben 6 ab. D. h.: Die Stützelement-Flanken 12a, 12b stehen mit den Scheiben-Wangen 14a, 14b zwecks Drehmomentübertragung reibschlüssig in Wirkverbindung.
Die aus elastomerem Material bestehenden Zugträger 8a, 8b sind mit Zugsträngen (Corden) 16; 16a, 16b, ... (Details siehe Fig. 4) verstärkt.

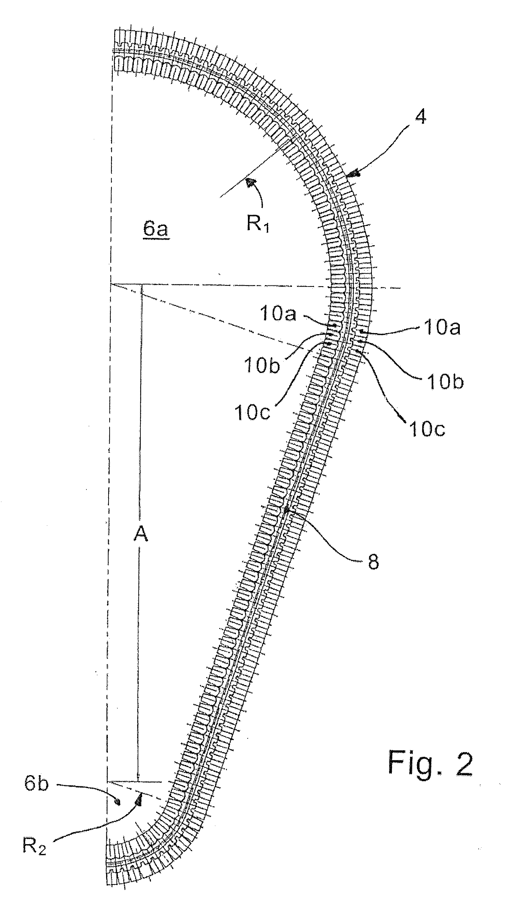

Die Fig. 2 zeigt ausschnittsweise eine erfindungsgemäße Anordnung 2 von der Seite. Die darin angegebenen Bezugszeichen sind mit denen in Fig. 1 identisch. Darüber hinaus bezeichnet R₁ den wirksamen Radius der einen Scheibe 6a, R₂ den wirksamen Radius der anderen Scheibe 6b. "A" bezeichnet den axialen Abstand beider Scheiben 6a, 6b voneinander.

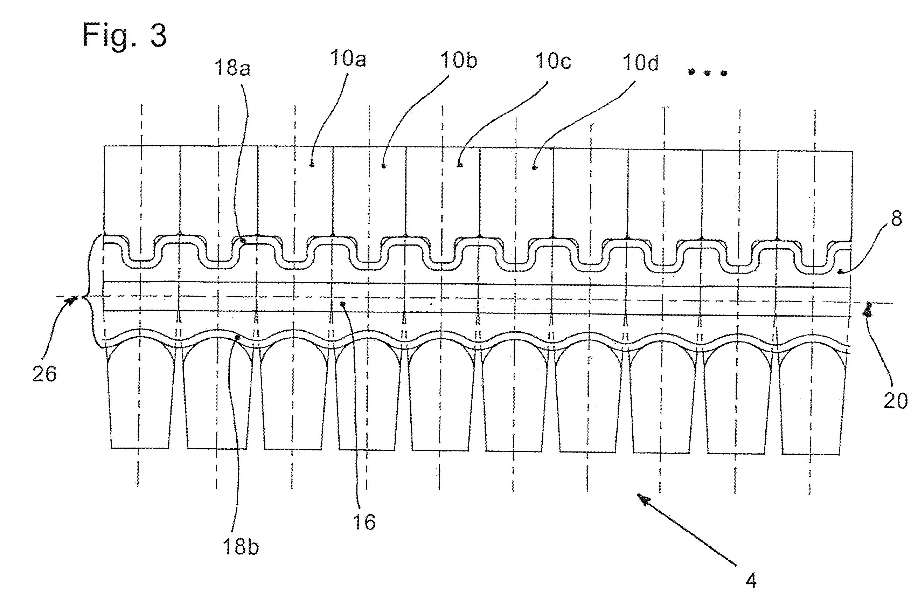

Der in Fig. 3 dargestellte Abschnitt eines Hybridkeilriemens 4 zeigt weitere Details: Die radial äußere Oberfläche des mit Corden 16; 16a, 16b, ... verstärkten Zugträgers 8 ist mäanderförmig ausgebildet. Die radial innere Oberfläche ist gewellt. Beide Oberflächen sind mit einer Gewebelage 18a, 18b abgedeckt und stehen mit entsprechenden Schlitz-Oberflächen der darauf angeordneten Stützelemente (Blöcke) 10; 10a, 10b, ... in Eingriff. Zur problemlosen Umschlingung kleiner Riemenscheibenradien R₁, R₂ sind die auf dem Zugträger 8 angeordneten Stützelemente 10a, 10b, ... ab der Zugstrang-Ebene (Zugstrang-Mittellinie, 20) in Richtung auf das jeweils radial innere Stützelement-Ende konisch verjüngt.
Die Stützelemente 10; 10a, 10b, ... - oder falls die Stützelemente 10; 10a, 10b, ... nicht massiv sind sondern aus einem sie verstärkenden Kern 22 und einer Kunststoff-Beschichtung 24 hergestellt sind: die Kunststoff-Beschichtung 24 - werden in einer festgelegten Reihenfolge, die auch jeweils aus mehreren Stützelementen bestehen kann (z. B. 10a-10b-10a-10b- ... oder in Gruppen 10a-10a-10b-10a-10a-10b-...,) aus verschiedenen Kunststoff-Varianten ausgeführt, wobei das Material der Stützelemente 10; 10a, 10b, ... oder der Kunststoffbeschichtung 24 auf dem flankenseitigen Riemenumfang in einer festgelegten Reihenfolge aus einzelnen Stützelementen 10; 10a, 10b, ... oder Gruppierungen von Stützelementen varüert.
Die (Stützelement-)Varianten 10a, 10b, ... können sich in Material und/oder OberflächenStruktur bzw. -Beschaffenheit voneinander unterscheiden (z. B.: 10a: Material 1; 10b: Material 2; 10c: Material 1; 10d: Material 2; usw. oder 10a: Material 1; 10b: Material 2; 10c: Material 3; 10d: Material 1; ...).

Aus Fig. 4 ist der Detail-Aufbau eines Stützelements 10 ersichtlich. Zur Ineingriffnahme mit den Wangen 14a, 14b einer Keilriemenscheibe 6 sind die Stützelement-Flanken 12a, 12b zu kleineren Scheibenradien R hin konisch verjüngt. Zur Aufnahme von Zugträgern 8a, 8b weisen die Stützelement-Flanken 12a, 12b jeweils einen Schlitz 26(a/b) auf.
Aus Fig. 4 ist außerdem ersichtlich, dass die Stützelemente 10 aus einem (metallischen) Kern 22 und einer Beschichtung 24 bestehen. Im vorliegenden Ausführungsbeispiel erstreckt sich die Kunststoff-Beschichtung 24 über die Stützelement-Flanken 12a, 12b und die Oberflächen der Schlitze 26a, 26b. Erfindungswesentlich ist das an der flankenseitigen Oberfläche der Stützelemente 10 (10a, 10b, ...) befindliche Material. Und zwar unterscheiden sich die flankenseitigen Oberflächen erfindungsgemäß in Bezug auf Reibbeiwert und/oder Abriebbeständigkeit von einem Stützelement 10a zum nächsten 10b. Die Fig. 4 zeigt weiterhin, dass die Zugträger 8a, 8b mit Zugsträngen (Corden) 16a, 16b, ... versehen sind. Dabei stellt die Zugstrang-Mittellinie 20 die biegeneutrale Ebene dar.

### Bezugszeichenliste

- 2: Anordnung, Hybrid(keil)-Riemen/Scheiben-Anordnung
- 4: Hybrid(keil)-Riemen
- 6; 6a, 6b: Keilriemenscheibe(n)
- 8; 8a, 8b: Zugträger
- 10; 10a, 10b, ...: Stützelement(e), Block (Blöcke), (Stützelement-)Varianten
- 12a, 12b: Seitenflanken der Blöcke, flankenseitige Oberfläche, Stützelement-Flanken
- 14a, 14b: Kraftübertragungsflanken (Wangen) der Scheiben 6
- 16; 16a, 16b, ...: Zugstränge (Corde)
- R₁: wirksamer Radius der einen Keilriemenscheibe
- R₂: wirksamer Radius der anderen Keilriemenscheibe
- A: Achsabstand beider Scheiben voneinander
- 18a, 18b: Gewebe, Gewebelage
- 20: Zugstrang-Ebene, Zugstrang-Mittellinie
- 22: Stützelement-Kern
- 24: Kunststoff-Beschichtung
- 26; 26a, 26b: Schlitz in Stützelement-Flanke(n) 12a, 12b

## Patentansprüche

1. Aus Hybridkeilriemen (4) und mindestens zwei Keilriemenscheiben (6a, 6b) bestehende Keilriemenanordnung (2),
wobei der Hybridkeilriemen (4) aus mindestens einem Zugträger (8) und einer Vielzahl formschlüssig daran angebrachter Stützelemente (10a, 10b, ...) besteht, und
wobei die Stützelemente (10a, 10b, ...) jeweils Seitenflanken (12a, 12b) aufweisen, die mit den jeweiligen Flanken (14a, 14b) der Riemenscheiben (6a, 6b) in Eingriff stehen,
**dadurch gekennzeichnet,**
**dass** sich die Seitenflanken (12a, 12b) der jeweils aufeinanderfolgenden Stützelemente (10a, 10b, ...) in ihren Oberflächen voneinander unterscheiden.

2. Keilriemenanordnung nach Anspruch 1,
**dadurch gekennzeichnet,**
**dass** die Unterschiedlichkeit in der Oberfläche von dem einen (10a) zum nächsten Stützelement (10b) in seinem Reibwert und/oder seiner Abriebbeständigkeit liegt.

3. Keilriemenanordnung nach Anspruch 1 oder 2,
**dadurch gekennzeichnet,**
**dass** die Stützelemente (10a, 10b, ...) aus einem verstärkenden Kern (22) und einer Kunststoffbeschichtung (24) bestehen, wobei das Material der Kunststoffbeschichtung (24) von einem (10a) zum nächsten Stützelement (10b) in einer festgelegten Reihenfolge aus einzelnen Stützelementen oder Gruppierungen von Stützelementen variiert.

4. Keilriemenanordnung nach einem der Ansprüche 1 bis 3,
**dadurch gekennzeichnet,**
das die Unterschiedlichkeit bezüglich der Oberfläche der Stützelement-Flanken (12a, 12b) von einer unterschiedlichen Oberflächenstruktur herrührt.

5. Keilriemenanordnung nach einem der Ansprüche 1 bis 4,
**dadurch gekennzeichnet,**
**dass** die unterschiedlichen Stützelemente (10a, 10b, ...) in sensierbarer Weise unterschiedlich markiert sind.
